# EUROPEAN PATENT SPECIFICATION

(11) **EP 2 324 963 B1**
(45) Date of publication and mention of the grant of the patent: **04.07.2012**
(21) Application number: 11151630.8
(22) Date of filing: 05.02.2007
(51) Int. Cl.: B25F 5/00, A01D 34/90, B23D 47/00, B27B 17/00

(54) **Anti-vibration arrangement for a hand-held motor-driven tool**
Vibrationsdämpfende Anordnung für ein tragbares motorbetriebenes Werkzeug
Agencement anti-vibrations pour outil motorisé portable

(43) Date of publication of application: 25.05.2011
(62) Divisional of application: 07709315.1
(73) Proprietor: Husqvarna AB, 561 82 Huskvarna (SE)
(72) Inventor: Würsig, Lars, 554 66 Jönköping (SE); Währborg, Fredrik, 566 35, Habo (SE)

(56) References cited:
- EP-A1- 1 530 890
- US-A- 3 813 776
- US-A1- 2002 073 558
- US-A1- 2006 000 438

## Description

### Technical Field

The present disclosure relates to an anti-vibration arrangement of a hand-held motor-driven tool, and especially to an anti-vibration arrangement for isolating a handle portion from a vibration-propagating portion of a hand-held motor-driven tool.

### Background

When using a hand-held motor-driven tool, such as a chain saw, clearing saw, brush cutter, trimmer or a cut-off machine, vibrations originating from e.g. the motor and/or the saw blade are propagating in the tool. To significantly reduce the propagation of the vibrations into a handle portion of the tool and further to the user of the tool, which is uncomfortable for the user of the tool and which could be hazardous to the user, a tool can be provided with anti-vibration elements for absorbing vibrations. The anti-vibration elements are arranged between the handle portion and the vibration-propagating portion such that the handle portion is isolated from the vibration-propagating portion.

Traditionally, for the hand-held motor-driven tools mentioned above, there are two anti-vibration elements arranged in a front portion and two anti-vibration elements arranged in a back portion of a handle portion of the tool, between the vibration-propagating portion and the handle portion of the tool. To achieve a good vibration-isolating factor between the vibration-propagating portion and the handle portion, relatively weak anti-vibration elements are needed. An anti-vibration element is normally realized by a coil spring or a rubber element.

The documents US 20020073558 A1, US 3813776 A and US 20060000438 discloses chainsaws with vibration-isolating devices including a pair of first and second vibration-isolating members with different vibration isolation characteristics for providing a vibration-isolating effect. The document EP 1530890 A1 discloses a portable power tool for use in farming and gardening works, comprising a vibration-isolation member comprising a first pair of elastomeric elements and by a second pair of elastomeric elements surrounding said first pair of elements and with hardness different from that of the first pair.

If coil springs are used, a means for limiting deflection of the spring is needed such that the coil springs are not plastically deformed when the springs are exposed to high static loads. At high static loads, the means for limiting deflection of the spring will come into contact with the handle portion, resulting in a considerably higher vibration level in the handle portion.

If rubber elements are used, the nature of the rubber elements make them function as both an anti-vibration element and a means for limiting deflection of an anti-vibration element. With the anti-vibration arrangements of today, comprising such rubber elements, a compromise has to be taken between stiffness of the rubber elements for limiting deflection of the element, and weakness of the rubber elements for achieving a high degree of vibration isolation.

Due to for example these reasons, the anti-vibration arrangements of today do not have optimal vibration isolation characteristics.

### Summary

An object of the invention is to provide an anti-vibration arrangement of a hand-held motor-driven tool, for isolating a handle portion from a vibration-propagating portion of the tool, which anti-vibration arrangement has good vibration isolation characteristics.

This is achieved according to a first aspect of the invention by arranging an anti-vibration arrangement according to claim 1. A force-receiving element may be arranged between the handle portion and the vibration-propagating portion for receiving a force related to a gravitational force acting on the vibration-propagating portion.

In prior art anti-vibration arrangements; the weight of the vibration-propagating portion has loaded the anti-vibration elements. Therefore, a compromise has been required between stiffness of the anti-vibration elements for coping with the weight of the vibration-propagating portion and weakness of the elements for achieving a high degree of isolation of the handle portion from vibrations from the vibration-propagating portion. By arranging a separate element for receiving the force related to the weight of the vibration-propagating portion, there will be no such load on the anti-vibration elements. As a result, the anti-vibration elements can be more optimally constructed for isolating the handle portion from vibrations from the vibration-propagating portion. I.e. the anti-vibration elements can be weaker constructed in the direction of the gravitational force acting on the vibration-propagating portion.

The force-receiving element may receive the force related to the gravitational force acting on the vibration-propagating portion optimally when the tool is placed in a horizontal direction.

The force-receiving element may be adjusted to the direction of the force originating from the weight of the tool, such that the anti-vibration elements are unloaded from the weight of the vibration-propagating portion also when the tool is tilted.

The first end may be loosely attached to the vibration-propagating portion and/or the second end is loosely attached to the handle portion. Thereby, the force-receiving element will automatically release its attachment with either the vibrating-propagating portion or the handle portion if the handle portion is disassembled from the vibration-propagating portion, and the handle portion can be disassembled from the vibration-propagating portion without risking damaging the force-receiving element.

The force-receiving element adjusted to a tilt of the tool, and which at the same time makes it easy to disassemble the handle portion from the vibration-propagating portion without risking damaging the force-receiving element.

According to an aspect of the invention, the anti-vibration element has a first part with a low stiffness and at least one second part with a stiffness higher than the first part. They are arranged such that the first part mainly isolate vibrations resulting from low static load and the at least one second part mainly isolate vibrations resulting from static load higher than the low static load. Thereby, an anti-vibration element is created with very good vibration isolation characteristics, which both functions as an anti-vibration element and as a device for limiting deflection of the element. By having an anti-vibration element with a number of parts, each part receiving a different amount of load, a transition between different loads will not be felt as uncomfortable by a user. The more parts that are used in the anti-vibration element, the less will a transition from one part to the next part of the anti-vibration element be observed by the user. The element according to this embodiment is especially useful when used together with the force-receiving element of the invention, since the force-receiving element makes it possible to have an extra low stiffness of the first part.

According to another aspect of the invention, the anti-vibration element is adapted for isolating the handle portion from vibrational movements in a direction parallel to a longitudinal axis of the vibration-propagating portion. Thereby, an anti-vibration element with high vibration isolation characteristics is achieved. The anti-vibration element is arranged with a first part with low stiffness and at least one second part with a stiffness higher than the first part, such that the element receives vibrations in a number of steps.

According to a second aspect of the invention, the object of the invention is achieved by an anti-vibration arrangement that is adapted for isolating the handle portion from movements in a direction parallel to a longitudinal axis of the vibration-propagating portion, movements that occur due to the vibrations originating from the vibration-propagating portion, as defined in claim 1.

It has been observed that the vibrations in a vibration-propagating portion may give rise to movements in the vibration-propagating portion in the direction of the longitudinal axis of the vibration-propagating portion, due to a rotating movement of a holder of the anti-vibration elements, i.e. of a protruding device of a tube-shaped portion for housing a drive shaft. This is especially true if the vibrations give rise to a mode shape that has a node at the point of the vibration-propagating portion where a holder for an anti-vibration element is situated. Therefore, by arranging the anti-vibration arrangement such that it is adapted for isolating the handle portion also from such movements in the vibration-propagating portion, an anti-vibration arrangement with better vibration isolation characteristics is achieved compared to prior art anti-vibration arrangements.

Either a separate anti-vibration element or an embodiment of the already existing anti-vibration element may be adapted for isolating the handle portion from movements of the vibration-propagating portion in the direction of the longitudinal axis of the vibration-propagating portion.

According to an embodiment, the geometry of the anti-vibration arrangement is adapted such that it isolates from movements of the vibration-propagating portion in a direction parallel to a longitudinal axis of the vibration-propagating portion. By having a solution where the geometry of the anti-vibration element is adapted, and not e.g. a choice of material, it will be possible to form a cost-effective arrangement with good vibration isolation characteristics.

The anti-vibration arrangement is arranged such that it is adapted for isolating the handle portion from movements in a direction parallel to the longitudinal axis of the vibration-propagating portion by haying an anti-vibration element with a first part with low stiffness and a second part with high stiffness in the direction parallel to the longitudinal axis. As a result, a vibration element is achieved that has a good function for isolating for vibrations in this direction at both low and high static load, and which at the same time functions as a device for limiting the deflection of the anti-vibration element.

According to a second aspect of the invention, the second part is arranged coaxially around the first part. Thereby, the anti-vibration element is arranged for isolating vibrations in any possible direction, i.e. in x, y and z direction.

According to another embodiment of the second aspect of the invention, the anti-vibration arrangement also comprises a force-receiving element adapted for receiving the weight of the vibration-propagating portion. Thereby, the anti-vibration elements can be constructed with weak first portions such that a good vibration isolation characteristic is achieved.

According to a third aspect of the invention, the object of the invention is achieved by an anti-vibration arrangement comprising an anti-vibration element that has a first part with a low stiffness for isolating vibrations resulting from an exposure to a low static load and at least one second part with a higher stiffness than the first part for isolating vibrations resulting from an exposure to a static load higher than the low static load.

Thereby, an anti-vibration element is created with very good vibration isolation characteristics, which both functions as an anti-vibration element and as a device for limiting deflection of the element. By having an anti-vibration element with a number of parts, each part receiving a different amount of load, a transition between different loads will not be felt as uncomfortable by a user. The more parts that are used in the anti-vibration element, the less will a transition from one part to the next part of the anti-vibration element be observed by the user. Also, a high degree of vibration isolation could be achieved with such a solution, without the tool giving the user a "flabby" feeling caused by too soft connection between the handle portion and the vibration-propagating portion.

According to an embodiment of this aspect of the invention, the anti-vibration element is further adapted for isolating the handle portion from vibrational movements in a direction parallel to a longitudinal axis of the vibration-propagating portion. Thereby, an anti-vibration element with high vibration isolation characteristics also for vibrations in this direction is achieved.

According to another embodiment of this aspect of the invention, the anti-vibration arrangement also comprises a force-receiving element adapted for receiving the weight of the vibration-propagating portion. The force-receiving element makes it possible to have an extra low stiffness of the first part of the anti-vibration element, since the first part does not have to be arranged to carry the weight of the vibration-propagating portion.

The anti-vibration elements used in the embodiments of the invention are made from rubber or a rubber-like material, since such a material makes it possible to achieve an element with a good vibration isolation characteristics.

According to a fourth aspect of the invention, a hand-held motor-driven tool is claimed, comprising a handle portion and a vibration-propagating portion and an anti-vibration arrangement according to any of the embodiments of the invention, which anti-vibration arrangement is arranged between the handle portion and the vibration-propagating portion of the tool.

The hand-held motor-driven tool is preferably any kind of hand-held motor-driven tool wherein a relatively long drive shaft is provided for transmitting movement from a drive motor to a driven work tool, e.g. a rotatable work tool, and wherein a handle portion is arranged via an anti-vibration arrangement to a vibration-propagating portion comprising the drive motor, the drive shaft, the work tool and a tube shaped portion for housing the drive shaft. Such a hand-held motor-driven tool may be for example a brush cutter, a pole chain saw, a trimmer such as a pole hedge trimmer, an edge cutter or a clearing saw.

### Brief Description of the Drawings

The invention will in the following be described in more detail with reference to the enclosed drawings, wherein:
Figure 1 shows a perspective view of a clearing saw for which the invention may be used.
Figure 2 shows a perspective view of an embodiment of an anti-vibration arrangement according to the invention arranged on a tube-shaped portion of a tool before the arrangement is inserted into a handle portion of the tool.
Figure 3 shows a side view of an embodiment of the invention inserted into a handle portion of a tool.
Figure 4 shows a front view of an anti-vibration element according to the invention.
Figure 5 shows a cross-sectional view in section I-I of the anti-vibration element shown in figure 4.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

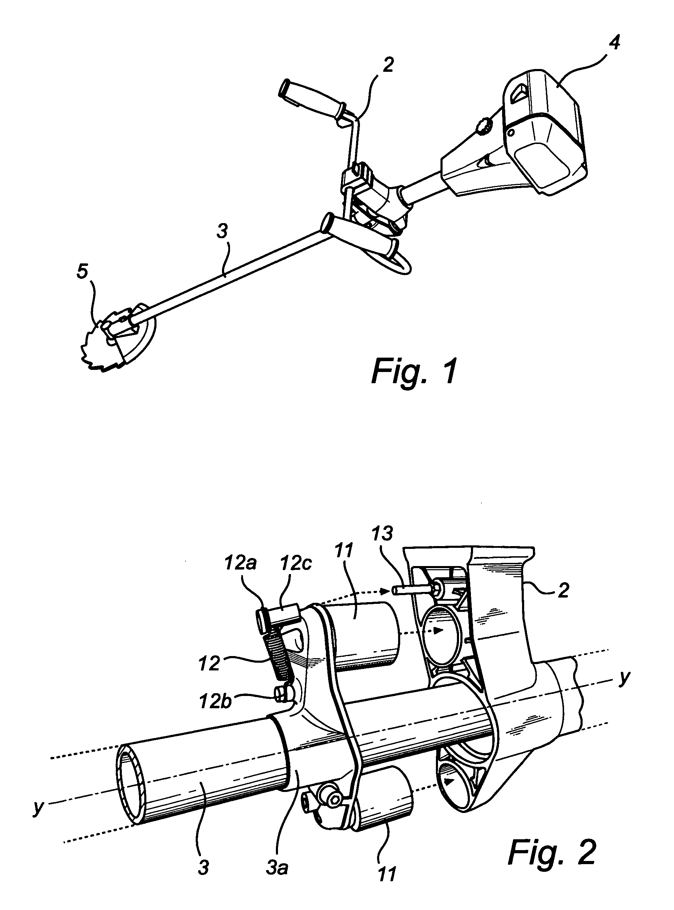

Figure 1 shows a clearing saw, which is an example of a hand-held motor-driven tool for which the present invention may be used. The clearing saw comprises a handle 2, a motor (not shown) inside a motor housing 4, a rotatable work tool 5 in shape of a circular sawblade and a tube-shaped portion 3. The tube-shaped portion 3 houses a drive shaft, which connects the motor to the rotatable work tool 5. The tool, i.e. the tube-shaped portion 3 and the drive shaft, has a longitudinal axis Y. The drive shaft is arranged to transfer a rotational movement produced by the motor to the rotatable work tool 5. Vibrations originating from the motor or the rotatable work tool 5 may propagate into other parts of the tool, such as the tube-shaped portion 3.

In order to avoid that such vibrations propagate into a handle portion of the tool, the handle 2 is connected via an anti-vibration arrangement to the tube-shaped portion 3. Similarly, to avoid that such vibrations propagate into the motor housing 4, the motor housing 4 is connected to a vibration-propagating part inside the motor housing via a similar anti-vibration arrangement. In the embodiment of figure 1, the handle 2 and the motor housing 4 are connected, and constitutes a handle portion that is isolated from vibrations from a part of the tool, called a vibration-propagating portion of the tool, comprising motor, drive shaft, tube-shaped portion 3 and work tool 5.

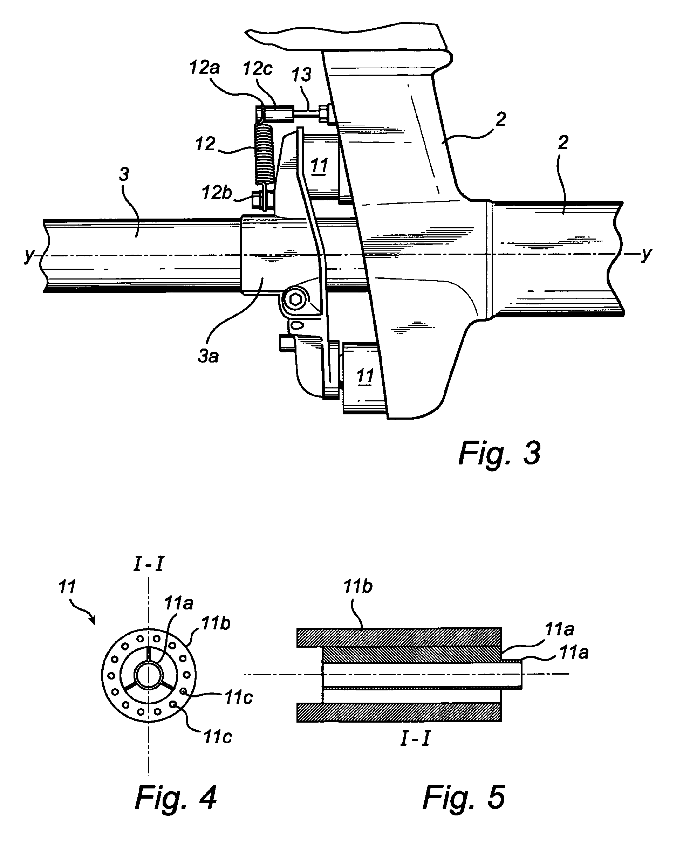

Figures 2 and 3 show an embodiment of the anti-vibration arrangement of the invention attached to a tool, such as the tool shown in figure 1. To the tube-shaped portion 3 is associated a protruding device 3a for connecting two anti-vibration elements 11 to the vibration-propagating portion illustrated by the tube-shaped portion 3. The protruding device 3a may either be fixedly arranged at the tube-shaped portion 3, e.g. as an integrated part of the tube-shaped portion 3, or it may be a separate part arranged at the tube-shaped portion by an attachment element such as a screw. The protruding device shown in figures 2 and 3 surrounds a periphery of the tube-shaped portion. To the protruding device 3 a are the two anti-vibration elements 11 connected, preferably at opposite sides of the tube-shaped portion. Each anti-vibration element 11 is connected at a first end to the protruding device 3a and at a second end to the handle portion 2, preferably such that their longitudinal axis is substantially parallel to the longitudinal axis Y of the tube-shaped portion 3.

The anti-vibration arrangement also comprises a force-receiving element 12, provided by a coil spring. The spring 12 has a first end 12b attached to the protruding device 3a of the tube-shaped portion 3, and a second end 12a attached to the handle portion 2 via a sleeve 12c and a pin 13. The purpose with the spring 12 is to receive a gravitational force related to the weight of the vibration-propagating portion. For this purpose, the spring 12 is arranged between the handle portion 2 and the tube-shaped portion 3, such that it has a longitudinal extension in a substantially vertical direction when the tool is in a normal horizontal working position. By such an arrangement, the anti-vibration elements 11 do not have to be stiff enough to carry the weight of the vibration-propagating portion. Instead, the anti-vibration elements 11 could be better adapted for isolating the handle portion 2 from vibrations in the tube-shaped portion 3.

The force-receiving element 12 is arranged for receiving a force in its longitudinal extension, but the force-receiving element preferably has a very low stiffness in other directions.

As mentioned above, the second end 12a of the spring 12 is attached to the handle portion 2 via a sleeve 12c and a pin 13. The pin 13 is fixedly arranged to the handle portion 2, and the sleeve 12c is arranged to the second end 12a of the spring, e.g. by a snap connection to a loop of the second end 12a. The sleeve 12c is arranged to be loosely connected to the pin 13, by pushing the sleeve 12c onto the pin 13. When the sleeve 12c has been pushed onto the pin 13, the sleeve can relatively freely slide and rotate on the pin. Thereby, the spring will be automatically adjusted to the direction of the gravitational force acting on the tube-shaped portion 3, when the tool is tilted, by the sleeve sliding on the pin. The pin preferably has a cylindrical shape.

Another purpose with the loose connection between the spring and the handle portion is that it will be easy to assemble the protruding device 3a onto the tube-shaped portion 3 and/or the handle portion 2 onto the tool. Also, there is no risk that the spring 12 will be destroyed when disassembling the tool, since the sleeve 12c will only slide off the pin 13 if the handle portion 2 and the protruding device 3a are moved away from each other. In comparison, if the spring 12 would be attached to the handle portion 2 and the protruding device 3a of the tube-shaped portion 3 by attachment elements such as screws, the spring may be destroyed at a disassembling step if the spring is not disassembled from either the handle portion or the protruding device 3a of the tube-shaped portion 3 before the handle portion 2 and the protruding device 3a are moved away from each other.

Alternatively, any kind of loose attachment between the spring 12 and the handle portion 2 may be used. As another alternative, there may be a loose attachment between the spring 12 and the tube-shaped portion 3 or the protruding device 3a, or there may be loose attachments between both the spring 12 and the handle portion 2 and the spring 12 and the tube-shaped portion 3.

The force-receiving element 12 could be any kind of elastic material for receiving the gravitational force acting on the vibration-propagating portion. As an alternative to a spring, such as a coil spring, the force-receiving element could be any device having a stiffness in only one direction, e.g. a string or similar. In one embodiment, the force-receiving element 12 would make the anti-vibration element 11 centre around a pin of the handle portion onto which the anti-vibration element 11 is arranged, when the tool is not in use.

Figures 4 and 5 show an embodiment of an anti-vibration element 11 according to the invention. The anti-vibration element 11 has a first part 11a arranged to be attached to the protruding device 3a and a second part 11b arranged to be attached to the handle portion 2. The second part 11b has a cylindrical shape with a circular cross-section, which encircles the cross-section of the first part 11a, such that the second part is arranged coaxially around the first part. The first part 11a has a first section with a cylindrical shape with a circular cross-section, and a number of second sections extending from the first section with a circular cross section outwards to connect the first part with the second part 11b. The first part 11a has thin dimensions, which results in a low stiffness, with the purpose of isolating vibrations resulting from an exposure to low static loads on the vibration-propagating part. The second part 11b has thicker dimensions than the first part, which results in a higher stiffness, with the purpose of isolating vibrations resulting from an exposure to high static loads on the vibration-propagating part. At low loads, the first part 11a will only be displaced a small distance and vibrations will be isolated by the first part. At higher loads, the first part will be displaced such that the first section comes into contact with the second part 11b. This second part 11b will then function as a vibration isolator for the higher loads and as a device for limiting deflection of the element at the same time. Thereby, an anti-vibration element with very good vibration isolation characteristics is achieved. Also, the second part 11b of the embodiment is equipped with a number of through holes 11c extending in a longitudinal direction of the cylinder-shaped second part 11b. Thereby, the second part will have a first, medium hard stiffness before the holes 11c on one side are compressed and a second, hard stiffness when the holes on one side are compressed.

Alternatively, the anti-vibration element 11 may comprise more than two parts, each part having a different stiffness for receiving vibrations.

The vibrations propagate in the tube-shaped portion 3 with a mode shape described as a sinusoidal-like waveform. It has been observed that the vibrations in the tube-shaped portion 3 may give rise to movements of the tube-shaped portion 3 in the direction of the longitudinal axis Y of the tube-shaped portion, which would give a rotating movement of the protruding device 3a around an axis perpendicular to the longitudinal axis Y. This is especially true if the vibrations give rise to a sinusoidal waveform having a node at the point of the tube-shaped portion where the protruding device is situated. Therefore, by arranging the anti-vibration arrangement such that it is adapted for isolating also movements in the direction of the longitudinal axis Y of the tube-shaped portion, an anti-vibration arrangement with better vibration isolation characteristics is achieved compared to prior art anti-vibration arrangements.

For this reason, an embodiment of the anti-vibration element 11 has a shape in a longitudinal direction as shown in figure 5. The first part 11a of the anti-vibration element 11 is displaced in the longitudinal direction of the anti-vibration element compared to the second part 11b. As mentioned, the first part 11a is connected to the tube shaped portion 3 via the protruding device 3a and the second part 11b is connected to the handle portion 2. At low movements in the direction parallel to the longitudinal axis Y of the tube-shaped portion, the first part 11a with a low stiffness will receive the movements such that the vibrations in this direction will be isolated from the handle portion. At greater movements in the direction parallel to the longitudinal axis Y of the tube-shaped portion, the first part will be pushed in the longitudinal direction such that the second part 11b will come into contact with the protruding device 3a and the movements will be received by the second part 11b instead. Thereby, the anti-vibration element 11 according to this embodiment will receive vibrations in two steps (weak and strong vibrations) both in a direction parallel to the longitudinal axis Y of the tube-shaped portion, due to the displacement of the first part 11a to the second part 11b in the longitudinal direction, and in a direction transversal to the longitudinal axis Y, due to the different cross-sectional dimensions of the first part 11a and the second part 11b.

As an alternative, the anti-vibration arrangement may have a separate second anti-vibration element for isolating the handle portion from movements in the direction parallel to the longitudinal axis Y of the tube-shaped portion.

The anti-vibration element arranged to receive vibrations in a direction parallel to the longitudinal axis of the tube-shaped portion may have more than two parts, each part having a different stiffness for isolating the handle portion from the tube-shaped portion.

In the embodiment of the invention shown in figures 2-3, there are two anti-vibration elements 11 connected to the tube-shaped portion at opposite sides of the tube-shaped portion. Although, there may be only one anti-vibration element as well as more than two anti-vibration elements connected to the tube-shaped portion, either via a protruding device or directly to the tube-shaped portion.

A similar anti-vibration arrangement as described above is with advantage connected between the motor housing 4 and a vibration-propagating portion inside the motor housing, for isolating the motor housing from vibrations in the vibration-propagating portion.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. Anti-vibration arrangement for a handheld motor-driven tool, for isolating a handle portion (2) of the tool from a vibration-propagating portion (3) of the tool, wherein the vibration-propagating portion (3) of the tool comprises a tube-shaped portion (3) housing a drive shaft which connects a motor to a rotatable work tool, and wherein the tube-shaped portion (3) and the drive shaft has a longitudinal axis Y, the arrangement comprising:
at least one anti-vibration element (11) made from rubber or a rubber-like material arranged between the handle portion (2) and the vibration-propagating portion (3) for isolating the handle portion from vibrations originating from the vibration-propagating portion (3), wherein
the anti-vibration element is provided with a first part (11a) with a low stiffness for isolating vibrations resulting from an exposure to a low static load and at least one second part (11b) with a higher stiffness than the first part for isolating vibrations resulting from an exposure to static load higher than the low static load, **characterized in that** the second part (11b) has a cylindrical shape with a circular cross-section, which encircles the cross-section of the first part (11a), such that the second part (11b) is arranged coaxially around the first part (11a), and wherein a longitudinal axis of the at least one anti-vibration element (11) is substantially parallel to the longitudinal axis (Y) of the tube-shaped portion (3) to thereby isolate the handle portion from movements in a direction parallel to a longitudinal axis (Y) of the vibration-propagating portion (3), movements that occur due to the vibrations originating from the vibration-propagating portion (3).

2. Anti-vibration arrangement according to claim 1, wherein the arrangement has a second anti-vibration element adapted for isolating the handle portion (2) from movements in a direction parallel to a longitudinal axis (Y) of the vibration-propagating portion (3).

3. Anti-vibration arrangement according to any of claims 1-2, wherein the anti-vibration arrangement is adapted for isolating the handle portion (2) from movements in the direction parallel to the longitudinal axis (Y) of the vibration-propagating portion (3) by having a geometry adapted such that the anti-vibration arrangement is flexible in the direction parallel to the longitudinal axis of the vibration-propagating portion.

4. Anti-vibration arrangement according any of claims 1-3, wherein the first part (11a) is connected to the vibration-propagating portion (3), and one of the at least one second part (11b) is connected to the handle portion (2).

5. Anti-vibration arrangement according to claim 4, wherein the at least one second part (11b) is in contact with the vibration-propagating portion (3) at high static loads.

6. Anti-vibration arrangement according to any of claims 1-5, wherein a range of movement is allowed between the first part (11a) and the at least one second part (11b) in the direction parallel to the longitudinal axis (Y) of the vibration-propagating portion (3).

7. Anti-vibration arrangement according to claim 6, wherein the first part (11a) is displaced in relation to the at least one second part (11b) in the direction parallel to the longitudinal axis (Y) of the vibration-propagating portion (3).

8. Anti-vibration arrangement according to any of claims 1-7, wherein the anti-vibration arrangement also comprises a force-receiving element (12) arranged between the handle portion (2) and the vibration-propagating portion (3), which force-receiving element (12) is adapted for receiving a force related to the gravitational force acting on the vibration-propagating portion (3).

9. Anti-vibration arrangement according to claim 8, wherein the force-receiving element (12) has a first end (12b) attached to the vibration-propagating portion (3) and a second end (12a) attached to the handle portion (2), and wherein the force-receiving element (12) is arranged on the tool such that it has a substantial extension in a direction substantially perpendicular to the longitudinal axis (Y) of the vibration-propagating portion (3).

## Patentansprüche

1. Vibrationsdämpfende Anordnung für ein tragbares motorbetriebenes Werkzeug, zum Isolieren eines Griffabschnitts (2) des Werkzeugs von einem vibrationsübertragenden Abschnitt (3) des Werkzeugs, wobei der vibrationsübertragende Abschnitt (3) des Werkzeugs einen rohrförmigen Abschnitt (3) umfasst, der eine Antriebswelle aufnimmt, die einen Motor mit einem drehbaren Arbeitswerkzeug verbindet, und wobei der rohrförmige Abschnitt (3) und die Antriebswelle eine Längsachse Y aufweisen, wobei die Anordnung Folgendes umfasst:
mindestens ein vibrationsdämpfendes Element (11), das aus Gummi oder einem gummiartigen Material hergestellt ist und zwischen dem Griffabschnitt (2) und dem vibrationsübertragenden Abschnitt (3) zum Isolieren des Griffabschnitts von Vibrationen, die vom vibrationsübertragenden Abschnitt (3) herrühren, angeordnet ist, wobei
das vibrationsdämpfende Element mit einem ersten Teil (11a) mit einer geringen Steifigkeit zum Isolieren von Vibrationen, die sich aus der Einwirkung einer geringen statischen Beanspruchung ergeben, und mindestens einem zweiten Teil (11b) mit einer höheren Steifigkeit als der erste Teil zum Isolieren von Vibrationen versehen ist, die sich aus der Einwirkung einer statischen Beanspruchung ergeben, die höher als die geringe statische Beanspruchung ist,
**dadurch gekennzeichnet, dass** der zweite Teil (11b) eine zylindrische Form mit einem kreisförmigen Querschnitt aufweist, der den Querschnitt des ersten Teils (11a) umgibt, sodass der zweite Teil (11b) koaxial um den ersten Teil (11a) herum angeordnet ist, und wobei eine Längsachse des mindestens einen vibrationsdämpfenden Elements (11) im Wesentlichen parallel zur Längsachse (Y) des rohrförmigen Abschnitts (3) verläuft, um **dadurch** den Griffabschnitt von Bewegungen in einer Richtung parallel zu einer Längsachse (Y) des vibrationsübertragenden Abschnitts (3) zu isolieren, Bewegungen, die aufgrund der Vibrationen auftreten, die von dem vibrationsübertragenden Abschnitt (3) herrühren.

2. Vibrationsdämpfende Anordnung nach Anspruch 1, wobei die Anordnung ein zweites vibrationsdämpfendes Element aufweist, das angepasst ist, den Griffabschnitt (2) von Bewegungen in einer Richtung parallel zu einer Längsachse (Y) des vibrationsübertragenden Abschnitts (3) zu isolieren.

3. Vibrationsdämpfende Anordnung nach einem der Ansprüche 1 bis 2, wobei die vibrationsdämpfende Anordnung angepasst ist, den Griffabschnitt (2) von Bewegungen in der Richtung parallel zur Längsachse (Y) des vibrationsübertragenden Abschnitts (3) zu isolieren, da sie eine Geometrie aufweist, die derart angepasst ist, dass die vibrationsdämpfende Anordnung in der Richtung parallel zur Längsachse des vibrationsübertragenden Abschnitts flexibel ist.

4. Vibrationsdämpfende Anordnung nach einem der Ansprüche 1 bis 3, wobei der erste Teil (11 a) mit dem vibrationsübertragenden Abschnitt (3) verbunden ist und einer des mindestens einen zweiten Teils (11b) mit dem Griffabschnitt (2) verbunden ist.

5. Vibrationsdämpfende Anordnung nach Anspruch 4, wobei der mindestens eine zweite Teil (11 b) den vibrationsübertragenden Abschnitt (3) bei hohen statischen Beanspruchungen berührt.

6. Vibrationsdämpfende Anordnung nach einem der Ansprüche 1 bis 5, wobei in der Richtung parallel zur Längsachse (Y) des vibrationsübertragenden Abschnitts (3) ein Bewegungsbereich zwischen dem ersten Teil (11 a) und dem mindestens einen zweiten Teil (11b) zulässig ist.

7. Vibrationsdämpfende Anordnung nach Anspruch 6, wobei der erste Teil (11a) bezogen auf den mindestens einen zweiten Teil (11 b) in der Richtung parallel zur Längsachse (Y) des vibrationsübertragenden Abschnitts (3) versetzt ist.

8. Vibrationsdämpfende Anordnung nach einem der Ansprüche 1 bis 7, wobei die vibrationsdämpfende Anordnung auch ein kraftaufnehmendes Element (12), das zwischen dem Griffabschnitt (2) und dem vibrationsübertragenden Abschnitt (3) angeordnet ist, umfasst, wobei das kraftaufnehmende Element (12) angepasst ist, eine Kraft aufzunehmen, die mit der Schwerkraft, die auf den vibrationsübertragenden Abschnitt (3) wirkt, in Zusammenhang steht.

9. Vibrationsdämpfende Anordnung nach Anspruch 8, wobei das kraftaufnehmende Element (12) ein erstes Ende (12b) aufweist, das an dem vibrationsübertragenden Abschnitt (3) befestigt ist, und ein zweites Ende (12a), das an dem Griffabschnitt (2) befestigt ist, und wobei das kraftaufnehmende Element (12) derart an dem Werkzeug angeordnet ist, dass es eine wesentliche Ausdehnung in einer Richtung im Wesentlichen senkrecht zur Längsachse (Y) des vibrationsübertragenden Abschnitts (3) aufweist.

## Revendications

1. Agencement anti-vibrations pour un outil motorisé portable, pour isoler une partie de poignée (2) de l'outil d'une partie de propagation de vibrations (3) de l'outil, dans lequel la partie de propagation de vibrations (3) de l'outil comprend une partie en forme de tube (3) enfermant un arbre d'entraînement qui connecte un moteur à un outil de travail rotatif, et dans lequel la partie en forme de tube (3) et l'arbre d'entraînement présentent un axe longitudinal Y, l'agencement comprenant :
au moins un élément anti-vibrations (11) fabriqué en caoutchouc ou en un matériau de type caoutchouc agencé entre la partie de poignée (2) et la partie de propagation de vibrations (3) pour isoler la partie de poignée des vibrations provenant de la partie de propagation de vibrations (3), dans lequel
l'élément anti-vibrations est doté d'une première pièce (11a) de faible rigidité pour isoler des vibrations résultant d'une exposition à une faible charge statique et au moins une seconde pièce (11b) d'une rigidité plus élevée que la première pièce pour isoler des vibrations résultant d'une exposition à une charge statique supérieure à la faible charge statique,
**caractérisé en ce que** la seconde pièce (11b) présente une forme cylindrique avec une section transversale circulaire, qui encercle la section transversale de la première pièce (11a), de sorte que la seconde pièce (11b) est agencée de manière coaxiale autour de la première pièce (11a), et dans lequel un axe longitudinal du au moins un élément anti-vibrations (11) est essentiellement parallèle à l'axe longitudinal (Y) de la partie en forme de tube (3) pour isoler ainsi la partie de poignée de mouvements dans une direction parallèle à un axe longitudinal (Y) de la partie de propagation de vibrations (3), mouvements qui se produisent en raison des vibrations provenant de la partie de propagation de vibrations (3).

2. Agencement anti-vibrations selon la revendication 1, dans lequel l'agencement présente un second élément anti-vibrations adapté pour isoler la partie de poignée (2) de mouvements dans une direction parallèle à un axe longitudinal (Y) de la partie de propagation de vibrations (3).

3. Agencement anti-vibrations selon l'une quelconque des revendications 1 à 2, dans lequel l'agencement anti-vibrations est adapté pour isoler la partie de poignée (2) de mouvements dans la direction parallèle à l'axe longitudinal (Y) de la partie de propagation de vibrations (3) en présentant une géométrie adaptée de sorte que l'agencement anti-vibrations est flexible dans la direction parallèle à l'axe longitudinal de la partie de propagation de vibrations.

4. Agencement anti-vibrations selon l'une quelconque des revendications 1 à 3, dans lequel la première pièce (11a) est connectée à la partie de propagation de vibrations (3), et l'une des au moins une secondes pièces (11b) est connectée à la partie de poignée (2).

5. Agencement anti-vibrations selon la revendication 4, dans lequel la au moins une seconde pièce (11b) est en contact avec la partie de propagation de vibrations (3) en cas de charges statiques élevées.

6. Agencement anti-vibrations selon l'une quelconque des revendications 1 à 5, dans lequel une plage de mouvement est autorisée entre la première pièce (11a) et la au moins une seconde pièce (11 b) dans la direction parallèle à l'axe longitudinal (Y) de la partie de propagation de vibrations (3).

7. Agencement anti-vibrations selon la revendication 6, dans lequel la première pièce (11a) est déplacée par rapport à la au moins une seconde pièce (11b) dans la direction parallèle à l'axe longitudinal (Y) de la partie de propagation de vibrations (3).

8. Agencement anti-vibrations selon l'une quelconque des revendications 1 à 7, dans lequel l'agencement anti-vibrations comprend également un élément de réception de force (12) agencé entre la partie de poignée (2) et la partie de propagation de vibrations (3), lequel élément de réception de force (12) est adapté pour recevoir une force relative à la force de gravitation agissant sur la partie de propagation de vibrations (3).

9. Agencement anti-vibrations selon la revendication 8, dans lequel l'élément de réception de force (12) présente une première extrémité (12b) reliée à la partie de propagation de vibrations (3) et une seconde extrémité (12a) reliée à la partie de poignée (2), et dans lequel l'élément de réception de force (12) est agencé sur l'outil de sorte qu'il présente une extension substantielle dans une direction essentiellement perpendiculaire à l'axe longitudinal (Y) de la partie de propagation de vibrations (3).
